# EUROPÄISCHE PATENTSCHRIFT

(11) **EP 3 887 676 B1**
(45) Veröffentlichungstag und Bekanntmachung des Hinweises auf die Patenterteilung: **28.05.2025**
(21) Anmeldenummer: 19813755.6
(22) Anmeldetag: 28.11.2019
(51) Int. Cl.: F03D 7/02

(54) **VERFAHREN ZUM BETRIEB EINER WINDENERGIEANLAGE**
METHOD FOR OPERATING A WIND POWER PLANT
PROCÉDÉ PERMETTANT DE FAIRE FONCTIONNER UNE ÉOLIENNE

(30) Priorität: 28.11.2018 DE 102018009333
(43) Veröffentlichungstag der Anmeldung: 06.10.2021
(73) Patentinhaber: Siemens Gamesa Renewable Energy Service GmbH, 20097 Hamburg (DE)
(72) Erfinder: WARFEN, Karsten, 23795 Weede / Söhren (DE); GOSCH-PLEß, Timo, 24783 Osterrönfeld (DE)
(74) Vertreter: Glawe, Delfs, Moll
(86) Internationale Anmeldenummer: PCT/EP2019/082938
(87) Internationale Veröffentlichungsnummer: WO 2020/109483

(56) Entgegenhaltungen:
- HAU ERICH: "Passages from: Wind Turbines, Fundamentals, Technologies, Application, Economics, 2nd edition", 31 December 2006 (2006-12-31), XP093070462, Retrieved from the Internet <URL:http://citenpl.internal.epo.org/wf/storage/189BC9EBD6E0003A3F1/originalPdf#zoom=100> [retrieved on 20230803]
- HERAUSGEBER ENERCON ET AL: "Technische Beschreibung ENERCON Windenergieanlage E-115 3 MW", 19 August 2015 (2015-08-19), pages 1 - 20, XP055666228, Retrieved from the Internet <URL:-> [retrieved on 20200207]
- PAO L Y ET AL: "Control of Wind Turbines", IEEE CONTROL SYSTEMS, IEEE, USA, vol. 31, no. 2, 1 April 2011 (2011-04-01), pages 44 - 62, XP011372740, ISSN: 1066-033X, DOI: 10.1109/MCS.2010.939962

## Beschreibung

Die Erfindung betrifft ein Verfahren zum Betrieb einer Windenergieanlage und eine zur Durchführung des Verfahrens ausgebildete Windenergieanlage sowie ein entsprechendes Computerprogrammprodukt.

Bei bekannten Windenergieanlagen lässt sich ein um eine im Wesentlichen horizontale Achse drehbarer Rotor mit daran zur Einstellung des Blattwinkels drehbar angeordneten Rotorblättern durch Wind in Rotation _{versetzen}. Der Rotor ist dabei - ggf. über eine Rotorwelle und/oder ein Getriebe - mit einem Generator zur Umwandlung der Rotationsenergie des Rotors in elektrische Energie verbunden. Die leistungsübertragenden drehenden Komponenten vom Rotor bis zum Generator werden zusammen als Triebstrang bezeichnet und sind regelmäßig in einer drehbar auf einem Turm montierten Gondel angeordnet.

Der Betrieb entsprechender Windenergieanlagen lässt sich in der Regel in zwei Betriebsbereiche unterteilen. In einem Teillastbereich bei Windgeschwindigkeiten unterhalb derjenigen Windgeschwindigkeit, bei der die Windenergieanlage ihre Nennleistung erzeugt, verbleiben die Blätter in einer konstanten Blattwinkelstellung, während das Antriebsmoment entsprechend dem verfügbaren Wind erhöht wird, bis Nennleistung erreicht wird. Ist die Nennleistung bereits erreicht, wird das Antriebsmoment konstant gehalten und die Blattwinkel der Rotorblätter so verstellt, dass die zulässige Rotationsgeschwindigkeit des Rotors nicht überschritten wird (Volllastbereich).

Im Betrieb der Windenergieanlage tritt aufgrund des auf den Rotor einwirkenden Windes neben der gewünschten Rotation des Rotors auch noch eine Schubkraft auf, die vollständig vom Turm der Windenergieanlage aufgenommen werden muss. Aufgrund der bei Interaktion des Rotors mit dem Wind regelmäßig auftretenden Turbulenzen ist die aufzunehmende Schubkraft dynamisch schwankend, was eine nicht unerhebliche Belastung für den Turm darstellt. Bei bislang bekannten Verfahren zum Betrieb von Windenergieanlagen, deren Zielsetzung die optimale Energieausbeute bei Einhaltung der Betriebsgrenzen der Komponenten des Triebstrangs ist, können zeitweise sehr hohe Schubbelastungen auftreten. Der Turm muss auf diese hohen Schubbelastungen ausgelegt sein, damit es bei deren Auftreten zu keiner unmittelbaren Beschädigung des Turmes oder zu einer unerwünschten Reduzierung dessen Lebensdauer kommt. Auf entsprechend hohe Schubbelastungen ausgelegte Türme sind aber in der Regel kostenintensiv.

Das Dokument Enercon et al: "Technische Beschreibung ENERCON Windenergieanlage E-115 3 MW" stellt eine technische Beschreibung einer Windenergieanlage dar. Unter anderem sind für diese Windenergieanlage sowohl ein Volllast- als auch ein Teillastbetrieb vorgesehen. Im Volllastbetrieb, in dem die Windenergieanlage bei hohen Windgeschwindigkeiten gefahren wird, wird die Windenergieanlage bei einer maximalen Rotordrehzahl von ca. 12,4 U/min und eine Nennleistung von 3000 kW betrieben. Diese Drehzahl wird mittels Blattverstellung begrenzt. Bei geringeren Windgeschwindigkeiten wird die Windenergieanlage im Teillastbetrieb gefahren, wobei Rotordrehzahl und Leistungsabgabe abhängig von der jeweils aktuellen Windgeschwindigkeit sind.

Das Dokument Pao L Y et al: "Control of Wind Turbines" beschreibt eine Steuerung von Windenergieanlagen, bei der das Generatordrehmoment verwendet werden kann, um den Rotor zu beschleunigen oder zu verzögern.

Bei dem Dokument Hau Erich: "Passages from: Wind Turbines, Fundamentals, Technologies, Application, Economics, 2nd edition" handelt es sich um ein Lehrbuch zu Windenergieanlagen, das unter anderem einen Teillastbetrieb einer Windenergieanlage bei Schwachwind beschreibt. Dabei soll ein fester Rotor-Blattwinkelwert eingestellt und auf Basis der Rotor-Leistungscharakteristik dem Wind dann möglichst viel Leistung entnommen werden.

Aufgabe der Erfindung ist es ein Verfahren zum Betrieb einer Windenergieanlage und eine entsprechend ausgebildete Steuerungsvorrichtung zu schaffen, bei der die Nachteile aus dem Stand der Technik nicht mehr oder nur noch in vermindertem Umfang auftreten.

Gelöst wird diese Aufgabe durch ein Verfahren gemäß dem Hauptanspruch sowie eine Windenergieanlage gemäß dem nebengeordneten Anspruch. Vorteilhafte Weiterbildungen sind Gegenstand der abhängigen Ansprüche.

Demnach betrifft die Erfindung ein Verfahren zum Betrieb einer Windenergieanlage umfassend einen Rotor mit winkelverstellbaren Rotorblättern und einen damit drehverbundenen Generator mit steuerbarem Drehmoment, wobei das Drehmoment des Generators auf einem Maximalwert begrenzt ist, der mit dem Blattwinkel der Rotorblätter derart verknüpft ist, dass der Maximalwert bei dem Einschalt-Blattwinkelwert kleiner als der Drehmomentnennwert und der Maximalwert bei einem von dem Einschalt-Blattwinkel abweichenden Nennblattwinkel gleich dem Drehmomentnennwert ist.

Weiterhin betrifft die Erfindung auch eine Windenergieanlage umfassend einen Rotor mit mehreren, hinsichtlich des Blattwinkels einstellbaren Rotorblättern, der drehbar an einer drehbar auf einem Turm angeordneten Gondel angeordnet und über einen Triebstrang mit einem in der Gondel angeordneten Generator zur Umwandlung von auf den Rotor einwirkender Windenergie in elektrische Energie verbunden ist, und eine Anlagensteuerung zur Steuerung der Windenergieanlage und deren Komponenten, wobei die Anlagensteuerung zur Durchführung eines der erfindungsgemäßen Verfahren ausgebildet ist.

Auch betrifft die Erfindung ein Computerprogrammprodukt umfassend Programmteile, welche, wenn geladen in einem Computer, vorzugsweise die Anlagensteuerung einer Windenergieanlage, zur Durchführung eines der erfindungsgemäßen Verfahren ausgelegt sind.

Zunächst werden einige in Zusammenhang mit der Erfindung verwendete Begriffe erläutert.

Mit "Blattwinkel" ist der Winkel der Rotorblätter um ihre Längsachse gegenüber einer definierten Null-Stellung bezeichnet. Häufig weisen sämtliche Rotorblätter einer Windenergieanlage im Wesentlichen identische Blattwinkel auf. Es ist aber auch möglich, dass die Rotorblätter einer Windenergieanlage auf individuelle und voneinander verschiedene Blattwinkel eingestellt werden. Aus Gründen der Übersichtlichkeit wird in der vorliegenden Anmeldung davon ausgegangen, dass sämtliche Rotorblätter der Windenergieanlage denselben Blattwinkel aufweisen bzw. auf diesen eingestellt sind, ohne dass dadurch jedoch die Möglichkeit der individuellen Blattwinkeleinstellung ausgeschlossen wäre.

Mit "Einschalt-Blattwinkel" ist derjenige Blattwinkel bezeichnet, auf den die Rotorblätter bei derjenigen Einschalt-Windgeschwindigkeit eingestellt werden, die ausreicht, um den Rotor aus der Ruhe heraus in Rotation zu versetzen und den Generator mit dem Netz zur Einspeisung von elektrischer Leistung verbunden ("aufgeschaltet") wird. Der Einschalt-Blattwinkel kann über den gesamten Teillastbereich einer Windenergieanlage beibehalten werden, oder der Blattwinkel wird ausgehend vom Einschalt-Blattwinkel über den Teillastbereich um einige wenige Grad variiert.

Mit "Drehmomentnennwert" ist dasjenige Drehmoment des Generators bezeichnet, welches bei der Nennleistung der Windenergieanlage vorliegt. Die "Nennleistung" der Windenergieanlage ist dabei diejenige elektrische Leistung der Windenergieanlage, auf welche die Windenergieanlage und ihre Komponenten ausgelegt sind, die bei Normalbetrieb also maximal dauerhaft in ein Energieversorgungsnetz eingespeist werden kann, ohne dass Beschädigungen o.ä. an der Windenergieanlage oder einer ihrer Komponenten zu erwarten sind.

Als "Nennblattwinkel" ist derjenige Blattwinkel bezeichnet, bei dem der Drehmomentnennwert erreicht wird. Dabei ist der Nennblattwinkel in der Regel kein konstanter Wert sondern kann in Abhängigkeit des Betriebsmodus der Windenergieanlage und/oder der weiter unten beschriebenen Belastungsdynamik variieren. Es ist selbstverständlich auch möglich, dass der Nennblattwinkel in Abhängigkeit von anderen Betriebsparameters variiert wird. Ausgehend vom Einschalt-Blattwinkel liegt der Nennblattwinkel in der Regel in Richtung der Fahnenstellung.

Die Erfindung hat erkannt, dass es für den Betrieb einer Windenergieanlage, insbesondere im Hinblick auf die Schubbelastung des Turms einer Windenergieanlage, vorteilhaft ist, den Blattwinkel des Rotors auch im Teillastbereich möglichst dynamisch verändern zu können, um bspw. kurzfristig auf Böen reagieren zu können. Erfindungsgemäß wird dies erreicht, in dem das Drehmoment des Generators auf einen über den Teillastbereich zwischen Einschalt-Blattwinkel und Nennblattwinkel veränderbaren Maximalwert begrenzt wird. Wird dieser Maximalwert erreicht, würde bei weiter zunehmendem Wind aufgrund des nicht weiter steigenden Drehmoments des Generators ohne jegliche Steuerungseingriffe grundsätzlich die Rotationsgeschwindigkeit des Rotors der Windenergieanlage steigen. Um dies zu verhindern, kann der Rotorblattwinkel verändert - in der Regel erhöht - werden, wobei hierzu auf aus dem Stand der Technik bekannte, in der Regel sehr dynamische Drehzahlregelungen für den Volllastbereich zurückgegriffen werden kann.

Erfindungsgemäß ist vorgesehen, dass der Maximalwert für das Drehmoment beim Einschalt-Blattwinkel geringer als der Drehmomentnennwert. Da der fragliche Maximalwert erfindungsgemäß mit dem Rotorblattwinkel verknüpft ist, entspricht das Maximaldrehmoment spätestens dann, wenn der Rotorblattwinkel aufgrund sonstiger Regelungen, wie der Blattwinkelregelung in Abhängigkeit der Rotationsgeschwindigkeit, einen vorgegebenen, vom Einschalt-Blattwinkel abweichenden Nennblattwinkel annimmt, dem Drehmomentnennwert. Sobald in der Folge der Maximalwert für das Drehmoment gleich dem Drehmomentnennwert ist, kann die Windenergieanlage bei ausreichendem Wind grundsätzlich Nennleistung liefern. Mit dem erfindungsgemäßen Verfahren weisen die Rotorblätter bereits bei Erreichen der Nennleistung einen von dem Einschalt-Blattwinkel abweichenden Blattwinkel, vorzugsweise den Nennblattwinkel, auf, der vorzugsweise so gewählt ist, dass die Schubbelastung zumindest bei Nennleistung gegenüber einer Blattstellung mit Einschalt-Blattwinkel reduziert ist.

Es ist selbstverständlich, dass gemäß dem erfindungsgemäßen Verfahren bei einer Nennleistung liefernde Windenergieanlage bei abnehmenden Wind der Maximalwert für das Drehmoment entsprechend des in Richtung des Einschalt-Blattwinkels - bspw. aufgrund der sinkenden Rotationsgeschwindigkeit - veränderten Blattwinkels reduziert wird.

Wie bereits erwähnt, kann der Blattwinkel bei Windenergieanlagen bereits mit Hilfe einer grundsätzlich aus dem Stand der Technik bekannten Steuerung in Abhängigkeit der Rotationsgeschwindigkeit verändert werden, falls sich die Rotationsgeschwindigkeit nicht mehr durch Erhöhung des Drehmoments des Generators begrenzen lässt, weil dieser bereits dem momentanen Maximalwert entspricht. Entsprechend wird bei einem Drehmoment entsprechend dem Maximalwert und abnehmender Rotationsgeschwindigkeit zunächst der Blattwinkel bis hin zum Einschalt-Blattwinkel verändert, bevor das Drehmoment des Generators zur Aufrechterhaltung der Rotation des Rotors reduziert wird.

Es ist aber alternativ auch möglich, dass der Blattwinkel, bspw. um einen vorgegebenen Schritt oder nach einem vorgegebenen Schema, verändert wird, sobald das Generatordrehmoment den sich jeweils aus dem zuvor geänderten Blattwinkel resultierenden Maximalwert erreicht. Durch eine unmittelbare Kopplung des Blattwinkels an das Erreichen des Maximalwertes kann eine zügige Anpassung des Blattwinkels erreicht werden, ohne dass eine feststellbare Veränderung in der Rotationsgeschwindigkeit des in dieser Hinsicht trägen Rotors abgewartet werden müsste.

Die Verknüpfung von dem Maximalwert für das Drehmoment und dem Blattwinkel kann anhand einer Kennlinie erfolgen, die vorzugsweise parametrisiert ist. Die Kennlinie kann durch eine oder mehrere mathematische Funktionen dargestellt sein, wobei bspw. für unterschiedliche Blattwinkelbereiche unterschiedliche Funktionen gelten können. Es ist aber auch möglich, dass die Kennlinie in Form einer Kennwerttabelle hinterlegt ist, wobei zwischen jeweils zwei benachbarten Kennwerten bei Bedarf linear interpoliert wird.

Die Kennlinie kann bspw. für einen ersten, bspw. dem Einschalt-Blattwinkel entsprechenden Blattwinkel einen ersten Maximalwert und für einen Bereich größer gleich einem zweiten Blattwinkel einen zweiten konstanten Blattwinkel vorsehen, wobei der Maximalwert im Bereich zwischen dem ersten und dem zweiten Blattwinkel proportional, vorzugsweise linear in Abhängigkeit zum Blattwinkel verändert wird. Der initiale Maximalwert für das Drehmoment bleibt also solange konstant, bis er durch das tatsächliche Drehmoment erreicht wird, woraufhin er sich dann bei weiter steigendem Drehmoment in Abhängigkeit des Blattwinkels erhöht, bis der Maximalwert dem Nenndrehmoment gleicht. Es sind aber auch beliebige andere Kennlinienverläufe denkbar.

Es ist bevorzugt, wenn die Kennlinie und/oder der Nennblattwinkel in Abhängigkeit des Betriebszustandes der Windenergieanlage und/oder der Umgebungsbedingungen verändert wird. Dazu können - sofern vorhanden - die Parameter der Kennlinie verändert werden. Es ist aber auch möglich, dass für unterschiedliche Betriebszustände und/oder Umgebungsbedingungen unterschiedliche Kennlinien vorgesehen sind, die entsprechend dem momentanen Betriebszustand verwendet werden. Für einen sicheren Minimalbetrieb der Windenergieanlage kann bspw. eine Kennlinie mit für sämtliche Blattwinkel konstantem Maximalwert für das Drehmoment vorgesehen sein. Durch die Änderung der Kennlinie ändert sich regelmäßig auch der Nennblattwinkel.

Ein möglicher Faktor, der bei der Veränderung der Kennlinie herangezogen werden kann, ist die Rotorleistungsdynamik, wie sie in DE 10 2017 011 318.1 beschrieben ist. Dabei wird die Belastungsdynamik einer Windenergieanlage in Rückwirkung mit dem Wind als Gradient der Summe aus der momentanen, zur Beschleunigung des Triebstrangs einer Windenergieanlage führenden Beschleunigungsleistung (*P_{Beschleunigung}*) aus der gemessenen Drehgeschwindigkeit (*ω*) des Triebstrangs und der Ermitteln der momentan vom Triebstrang (10) übertragenen Leistung (*P*_{Ü*bertragen*}) bestimmt. Die momentan übertragene Leistung (*P*_{Ü*bertragen*}) lässt sich dabei aus einem momentanen Drehmomentsollwert (*M_{Soll}*) oder einem gemessenen Drehmoment (*M_{Mess}*) errechnen oder kann mit der gemessene elektrische Leistung (*P_{elektrisch}*) der Windenergieanlage gleichgesetzt werden. An der Belastungsdynamik lassen sich die Rückwirkungen der mit dem am Rotor angreifenden Wind entstehende dynamischen Belastung der Windenergieanlage ablesen. Ist die Belastungsdynamik gering, kann von einem gleichmäßigen Wind ausgegangen werden, während eine hohe Belastungsdynamik auf einen böigen Wind schließen lässt. Im erstgenannten Fall kann der Maximalwert im erfindungsgemäßen Verfahren aufgrund der geringeren zu erwartenden Schwankungen in der Schubbelastung bspw. eher erhöht werden, während im letzteren Fall eher eine Reduktion angezeigt ist, um übermäßige Schubbelastungen zu vermeiden.

Für das Verfahren kann grundsätzlich auf das mit einer geeigneten Messvorrichtung erfasste tatsächliche Drehmoment des Generators und/oder den auf geeignete Weise erfassten tatsächlichen Blattwinkel zurückgegriffen werden. Auch die Begrenzung des Drehmoments des Generators kann grundsätzlich unmittelbar, bspw. durch Eingriff in die entsprechende Steuerung der Windenergieanlage, erfolgen. Es ist aber bevorzugt, wenn anstelle eines gemessenen tatsächlichen Drehmomentes und/oder eines erfassten tatsächlichen Blattwinkels der oder die in der Anlagensteuerung regelmäßig für die Steuerung erforderliche und daher vorliegende Sollwerte für eben diese Größen herangezogen werden. Die Anlagensteuerungen von Windenergieanlagen sind in der Regel dazu ausgebildet, das tatsächliche Drehmoment auf den Drehmomentsollwert zu regeln, wobei es zumindest bei modernen Anlagen nur zu äußerst geringen, vernachlässigbaren Abweichungen von Drehmoment-Ist- und Sollwert kommt. Vergleichbares gilt für den tatsächlichen Blattwinkel und den Blattwinkelsollwert. Da etwaige Abweichungen zwischen Soll- und Ist-Werten - so klein sie auch sein mögen - aber dennoch regelmäßig schwanken, hat sich gezeigt, dass ein Rückgriff unmittelbar auf den Drehmomentsollwert und/oder den Blattwinkelsollwert zu einem robusteren Betrieb der Windenergieanlage führen, da dadurch auch sämtliche Ungenauigkeiten in der Erfassung der tatsächlichen Ist-Werte vermieden werden.

Insbesondere wenn bei dem erfindungsgemäßen Verfahren auf Sollwerte für Blattwinkel und Drehmoment zurückgegriffen wird und der Blattwinkel bei Erreichen des momentanen Maximalwertes für das Drehmoment in Abhängigkeit der Rotationsgeschwindigkeit des Rotors verändert wird, ist es ausreichend, wenn durch das erfindungsgemäße Verfahren ausschließlich auf den Drehmomentsollwert Einfluss genommen wird. Durch zeitweises Erhöhen oder Reduzieren des letztendlich durch den Generator bzw. den damit verbundenen Umrichter umgesetzten Drehmomentsollwertes um einen Offset kann der Rotor beschleunigt oder abgebremst werden, was bei entsprechenden Windenergieanlagensteuerungen dann vorhersehbare Veränderung des Blatteinstellwinkels nach sich zieht, ohne dass für das erfindungsgemäße Verfahren unmittelbar auch auf die Blattwinkeleinstellung Einfluss genommen werden müsste.

Zur Erläuterung der erfindungsgemäßen Windenergieanlage und des erfindungsgemäßen Computerprogrammproduktes wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
- Figur 1:: eine schematische Darstellung der Gondel einer zur Durchführung des erfindungsgemäßen Verfahrens ausgebildete erfindungsgemäßen Windenergieanlage; und
- Figur 2:: die Prinzipskizze einer möglichen Durchführung des erfindungsgemäßen Verfahrens; und
- Figur 3:: eine mögliche Kennlinie zur Verknüpfung des Blattwinkels und dem Maximalwert für das Drehmoment.

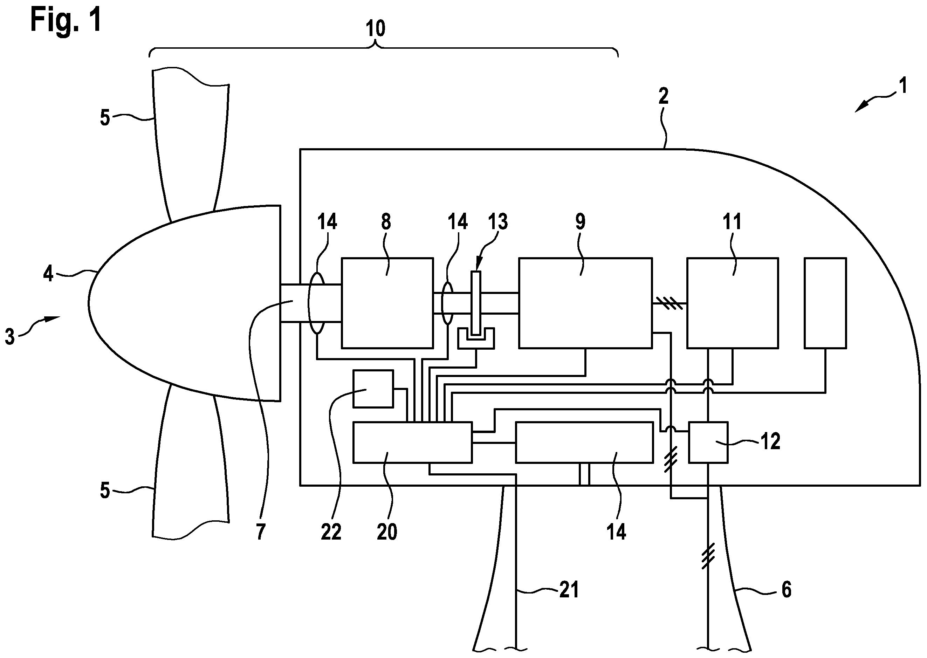

In Figur 1 ist die Gondel 2 einer erfindungsgemäße und damit zur Durchführung des erfindungsgemäßen Verfahrens ausgebildete Windenergieanlage 1 schematisch dargestellt. Die Windenergieanlage 1 umfasst einen Rotor 3 mit insgesamt drei, über nicht dargestellte Blattwinkelverstelleinrichtungen drehbar an einer Rotornabe 4 befestigten Rotorblättern 5. Der Rotor 3 ist drehbar an der Gondel 2 angeordnet, die wiederum über einen Azimutantrieb 14 drehbar um eine senkrechte Achse auf einem Turm 6 angeordnet ist.

Die Rotornabe 4 ist über eine Rotorwelle 7 mit zwischengeschaltetem Getriebe 8 mit einem Generator 9 zur Umwandlung von auf den Rotor 3 einwirkender Windenergie in elektrische Energie verbunden. Die leistungsübertragenden Komponenten vom Rotor 3 bis zum Generator 9 - also insbesondere die Rotorwelle 7 und das Getriebe 8 - bilden den Triebstrang 10.

Der Generator 9 ist im dargestellten Ausführungsbeispiel ein doppelt gespeister Asynchrongenerator, bei dem ein Teil der erzeugten Leistung direkt, ein anderer Teil der Leistung über einen Umrichter 11 und ein Schaltelement 12 zu einem am Fuß des Turmes 6 befindlichen Transformators (nicht dargestellt) geleitet und von dort in ein öffentliches Versorgungsnetz eingespeist wird.

Zwischen dem Getriebe 7 und dem Generator 9 ist weiterhin eine Bremse 13 vorgesehen, mit welcher eine Drehbewegung des Triebstrangs 10 abgebremst und der Rotor 3 bei Bedarf arretiert werden kann. Darüber hinaus sind Messaufnehmer 14 zur Ermittlung der Rotordrehzahl bzw. der Drehzahl der Welle 7 zwischen Getriebe 8 und Generator 9 vorgesehen.

Die Windenergieanlage 1 und ihre sämtlichen Komponenten werden durch die computerbasierte Anlagensteuerung 20 gesteuert. Dazu werden der Anlagensteuerung 20 sämtliche, in der Windenergieanlage 1 erfassten Messwerte sowie über eine Datenleitung 21 Sollwerte, bspw. von einem Netzbetreiber, zugeführt und mit Hilfe von in einem Speicher 22 abgelegten, dem Fachmann grundsätzlich bekannten Regelungsalgorithmen in Steuersignale umgesetzt, die dann wiederum an die verschiedenen Komponenten der Windenergieanlage 1 abgegeben werden. Die Anlagensteuerung 20 ermittelt in einem ersten Teil auf Basis der vorliegenden Informationen Sollwerte für einzelne von ihr regelbare Parameter des Betriebs der Windenergieanlage 1, die dann von anderen Teilen der Anlagensteuerung 20 derart umgesetzt werden, dass die entsprechenden Ist-Werte den Sollwerten entsprechen.

Erfindungsgemäß ist die Anlagensteuerung 20 zur Durchführung des nachfolgend näher beschriebenen erfindungsgemäßen Verfahrens ausgebildet, wozu ein dazu ausgebildetes Computerprogrammprodukt im Speicher 22 abgelegt und von der Anlagensteuerung 20 ausgeführt wird.

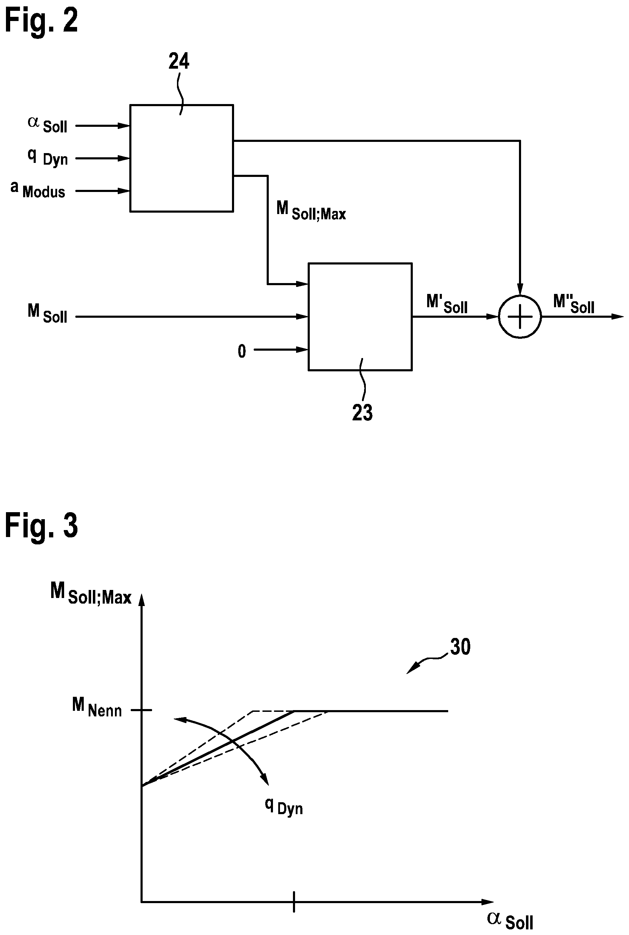

In Figur 2 ist eine Prinzipskizze zur Umsetzung des erfindungsgemäßen Verfahrens in der Anlagensteuerung 20 gezeigt. Dabei beschränkt sich die Darstellung auf den für die Durchführung des Verfahrens wesentlichen Teil der Anlagensteuerung 20.

Wie bereits erläutert, werden durch die Anlagensteuerung 20 auf Basis der erfassten Messwerte und sonstiger Steuerungsvorgaben Sollwerte für die einzelnen Betriebsparameter der Windenergieanlage 1 ermittelt. Dazu gehören auch Sollwerte für den Blattwinkel *α_{Soll}* und für das Generatordrehmoment *M_{Soll}*, die von weiteren, in Figur 2 nicht näher dargestellten Teilen der Anlagensteuerung 20 in Steuerbefehle für die einzelnen Komponenten der Windenergieanlage 1 umgesetzt werden, damit der tatsächliche Blattwinkel *α* und das tatsächliche Generatormoment *M* den Sollwerten entsprechen. Außerdem ermittelt die Anlagensteuerung 20 gemäß DE 10 2017 011 318.1 noch eine normierte Belastungsdynamik *q_{Dyn}*, die Werte zwischen 0 und 1 annimmt und Aufschluss über die an der Windenergieanlage auftretenden Turbulenzen gibt. Nicht zuletzt verfügt die Anlagensteuerung 20 und damit auch die Windenergieanlage 1 über verschiedene Betriebsmodi, bspw. einen Normalbetrieb und einen Sicherheitsbetrieb, bei dem die Leistungserzeugung reduziert ist, um auch bei evtl. Störungen der Windenergieanlage 1 diese nicht vollständig abschalten zu müssen. Der jeweils aktive Betriebsmodus der Anlagensteuerung 20 spiegelt sich im Wert *a_{Modus}* wieder.

Der auf bekannte Art und Weise ermittelte Sollwert für das Drehmoment *M_{Soll}* wird einem Sollwertbegrenzer 23 zugeführt, der den Sollwert *M_{Soll}* auf einen Wert zwischen 0 und einem Maximalwert für das Drehmoment *M*_{*Soll*;*Max*} begrenzt.

Der Maximalwert *M*_{*Soll*;*Max*} wird durch das Berechnungsmodul 24 ermittelt, welches als Eingangsgrößen den Blattwinkelsollwert *α_{Soll}*, den Sollwert für das Drehmoment *M_{Soll}*, die Belastungsdynamik *q_{Dyn}* und das Signal für den aktuellen Betriebsmodus *Modus* erhält.

Für die Ermittlung des Maximalwerts *M*_{*Soll*;*Max*} greift das Berechnungsmodul 24 auf eine Kennlinie 30, wie sie in Figur 3 beispielhaft dargestellt ist, zurück. Die Kennlinie 30 stellt dabei eine unmittelbare Verknüpfung zwischen Blattwinkel bzw. Blattwinkelsollwert *α_{Soll}* und dem Maximalwert für das Drehmoment bzw. dessen Sollwert *M*_{*Soll*;*Max*} dar. Dabei sind in dem Berechnungsmodul 24 mehrere unterschiedliche Kennlinien hinterlegt, die je nach derzeitigem Betriebsmodus gemäß dem Eingangssignal *a_{Modus}* ausgewählt und verwendet werden. Ein Teil dieser Kennlinien ist weiterhin parametrisiert, wobei wenigstens ein Parameter in Abhängigkeit der Belastungsdynamik *q_{Dyn}* verändert wird.

Die Kennlinie 30 in Figur 3 ist für den Normalbetrieb der Windenergieanlage 1 ausgelegt und in Abhängigkeit von der Belastungsdynamik *q_{Dyn}* veränderbar.

Für den Einschalt-Blattwinkel, den die Rotorblätter 5 der Windenergie 1 aufweisen, damit der Rotor aus der Ruhe bei ausreichendem Wind in Rotation versetzt wird (regelmäßig 0°), ist ein Maximalwert für das Drehmoment *M*_{*Soll*;*Max*} unterhalb des Nenndrehmomentes *M_{Nenn}* festgelegt. Außerdem ist ein Blattwinkel vorgesehen, ab dem der Maximalwert für das Drehmoment *M*_{*Soll*;*Max*} konstant dem Nenndrehmoment *M_{Nenn}* entspricht. In dem Bereich zwischen dem Einschalt-Blattwinkel und dem Nennblattwinkel, ab dem der Maximalwert *M*_{*Soll*;*Max*} auf das Nenndrehmoment *M_{Nenn}* festgelegt ist, besteht ein linearer Zusammenhang zwischen Blattwinkelsollwert *α_{Soll}* und Maximalwert für das Drehmoment *M*_{*Soll*;*Max*}. Ebenso können aus anderen Gründen, zum Beispiel zur Einhaltung von Schallkennwerten, weitere Kennlinien vorgegeben werden.

Der Nennblattwinkel verändert sich in Abhängigkeit der Belastungsdynamik *q_{Dyn}.* Bei einer niedrigen Belastungsdynamik *q_{Dyn}* wird der fragliche Nennblattwinkel in Richtung des Einschalt-Blattwinkels verschoben, bei einer hohen Belastungsdynamik *q_{Dyn}* in die entgegengesetzte Richtung. Dies ist in Figur 3 durch die gestrichelten Kennlinienverläufe angedeutet.

Neben der in Figur 3 dargestellten Kennlinie 30 für den Normalbetrieb ist noch eine weitere Kennlinie für den sicheren Minimalbetrieb im Berechnungsmodul 24 hinterlegt. Bei dieser Kennlinie 30 ist der Maximalwert für das Drehmoment *M*_{*Soll*;*Max*} für sämtliche Blattwinkel auf einen konstanten Wert festgelegt.

Das Berechnungsmodul 24 berechnet auf Basis der für den momentanen Betriebsmodus gültigen Kennlinie den Maximalwert für das Drehmoment *M*_{*Soll*;*Max*} und stellt diesem dem Sollwertbegrenzer 23 als Eingangswert zur Begrenzung des Sollwertes *M_{Soll}* zur Verfügung, woraus der ggf. auf den Maximalwert *M*_{*Soll*;*Max*} begrenzte Sollwert *M'_{Soll}* resultiert. Dieser Sollwert *M'_{Soll}* kann bereits grundsätzlich zur letztendlichen Steuerung des Generatormomentes herangezogen werden.

In dem in Figur 2 dargestellten Ausführungsbeispiel ist das Berechnungsmodul 24 weiterhin dazu ausgebildet bei bestimmten Betriebsmodi *a_{Modus}* und/oder ab einer bestimmten Belastungsdynamik *q_{Dyn}*, durch zeitweises Erhöhen und Reduzieren des von dem Sollwertbegrenzer 23 ermittelten Sollwerts *M'_{Soll}* zu dem Sollwert *M"_{Soll}* Einfluss auf die Rotationsgeschwindigkeit des Rotors 3 der Windenergieanlage 1 zu nehmen, was bei entsprechender Ausgestaltung der Anlagensteuerung 20 auf bekannte Art und Weise in einer Veränderung des Blattwinkels der Rotorblätter 5 resultiert.

## Patentansprüche

1. Verfahren zum Betrieb einer Windenergieanlage (1) umfassend einen Rotor (3) mit winkelverstellbaren Rotorblättern (5) und einen damit drehverbundenen Generator (9) mit steuerbarem Drehmoment,
**dadurch gekennzeichnet, dass**
das Drehmoment des Generators (9) auf einem Maximalwert begrenzt wird, der mit dem Blattwinkel der Rotorblätter (5) derart verknüpft ist, dass der Maximalwert bei dem Einschalt-Blattwinkelwert kleiner als der Drehmomentnennwert (*M_{Nenn}*) und der Maximalwert bei einem von dem Einschalt-Blattwinkel abweichenden Nennblattwinkel gleich dem Drehmomentnennwert (*M_{Nenn}*) ist.

2. Verfahren nach Anspruch 1,
**dadurch gekennzeichnet, dass**
der Blattwinkel bei Erreichen des Maximalwertes durch das Drehmoment verändert wird.

3. Verfahren nach Anspruch 1,
**dadurch gekennzeichnet, dass**
die Verknüpfung von dem Maximalwert für das Drehmoment und dem Blattwinkel anhand einer, vorzugsweise parametrisierten Kennlinie (30) erfolgt.

4. Verfahren nach Anspruch 1,
**dadurch gekennzeichnet, dass**
die Kennlinie und/oder der Nennblattwinkel in Abhängigkeit vom Betriebszustands der Windenergieanalage (*Modus*) und/oder der Umgebungsbedingungen verändert wird.

5. Verfahren nach Anspruch 1,
**dadurch gekennzeichnet, dass**
die Veränderung der Kennlinie (30) die Belastungsdynamik (*BDyn*) der Windenergieanlage (1) berücksichtigt.

6. Verfahren nach einem der vorhergehenden Ansprüche,
**dadurch gekennzeichnet, dass**
der Blattwinkel der Rotorblätter (5) und das Drehmoment des Generators (9) auf einen Blattwinkelsollwert (*α_{Soll}*) und einen Drehmomentsollwert (*M_{Soll}*) hin geregelt werden,
wobei der Maximalwert (*M*_{*Soll*;*Max*}) den Drehmoment-Sollwert (*M_{Soll}*) begrenzt und mit dem Blattwinkelsollwert (*α_{Soll}*) verknüpft ist.

7. Windenergieanlage (1) umfassend einen Rotor (3) mit mehreren, hinsichtlich des Blattwinkels einstellbaren Rotorblättern (5), der drehbar an einer drehbar auf einem Turm (6) angeordneten Gondel (2) angeordnet und über einen Triebstrang (10) mit einem in der Gondel (2) angeordneten Generator (9) zur Umwandlung von auf den Rotor (3) einwirkender Windenergie in elektrische Energie verbunden ist, und eine Anlagensteuerung (20) zur Steuerung der Windenergieanlage (1) und deren Komponenten, **dadurch gekennzeichnet, dass**
die Anlagensteuerung (20) zur Durchführung des Verfahrens nach einem der vorhergehenden Ansprüche ausgebildet ist.

8. Windenergieanlage (1) nach Anspruch 7,
**dadurch gekennzeichnet, dass**
die Anlagensteuerung (20) zur Steuerung des Blattwinkels der Rotorblätter bei Erreichen des Maximalwerts für das Drehmoment (*M*_{*Soll*;*Max*}) in Abhängigkeit der Rotationsgeschwindigkeit des Rotors (3) ausgebildet ist.

9. Windenergieanlage (1) nach Anspruch 8,
**dadurch gekennzeichnet, dass**
die Anlagensteuerung (20) dazu ausgebildet ist, zur Beeinflussung der Rotationsgeschwindigkeit des Rotors (3) das Drehmoment und/oder den Drehmomentsollwert (*M_{Soll}*) zeitweise zu erhöhen oder zu reduzieren.

10. Computerprogrammprodukt umfassend Programmteile, welche, wenn geladen in einem Computer, vorzugsweise die Anlagensteuerung (20) einer Windenergieanlage (1), zur Durchführung des Verfahrens nach einem der Ansprüche 1 bis 6 ausgelegt sind.

## Claims

1. Method for operating a wind power plant (1) comprising a rotor (3) with angle-adjustable rotor blades (5) and a generator (9) rotationally connected thereto and having a controllable torque,
**characterized in that**
the torque of the generator (9) is limited to a maximum value that is linked to the blade pitch angle of the rotor blades (5) in such a way that the maximum value at the switch-on blade pitch angle value is less than the nominal torque value *(M_{Nenn})* and the maximum value at a nominal blade pitch angle that differs from the switch-on blade pitch angle is equal to the nominal torque value *(M_{Nenn})*.

2. Method according to Claim 1,
**characterized in that**
the blade pitch angle on reaching the maximum value is changed by the torque.

3. Method according to Claim 1,
**characterized in that**
the link between the maximum value for the torque and the blade pitch angle is made on the basis of a preferably parameterized characteristic curve (30).

4. Method according to Claim 1,
**characterized in that**
the characteristic curve and/or the rated blade pitch angle is changed depending on the operating state of the wind power plant *(Modus)* and/or on the ambient conditions.

5. Method according to Claim 1,
**characterized in that**
the change to the characteristic curve (30) takes the loading dynamic *(BDyn)* of the wind power plant (1) into consideration.

6. Method according to one of the preceding claims,
**characterized in that**
the blade pitch angle of the rotor blades (5) and the torque of the generator (9) are regulated toward a blade pitch angle setpoint value *(α_{Soll})* and a torque setpoint value *(M_{Soll})*, wherein the maximum value *(M_{Soll;Max})* limits the torque setpoint value *(M_{Soll})*, and is linked to the blade pitch angle setpoint value *(α_{Soll})*.

7. Wind power plant (1) comprising a rotor (3) with a plurality of rotor blades (5) whose blade pitch angle is adjustable that is arranged rotatably at a nacelle (2) that is arranged rotatably on a tower (6) and is connected via a drivetrain (10) to a generator (9) arranged in the nacelle (2) for the conversion of wind energy acting on the rotor (3) into electrical energy, and a plant controller (20) for controlling the wind power plant (1) and its components,
**characterized in that**
the plant controller (20) is designed to carry out the method according to one of the preceding claims.

8. Wind power plant (1) according to Claim 7,
**characterized in that**
the plant controller (20) is designed, on reaching the maximum value for the torque *(M_{Soll;Max})*, to control the blade pitch angle of the rotor blades depending on the rotation speed of the rotor (3).

9. Wind power plant (1) according to Claim 8,
**characterized in that**
the plant controller (20) is designed to increase or reduce the torque and/or the torque setpoint value *(M_{Soll})* for a period of time in order to influence the rotation speed of the rotor (3).

10. Computer program product comprising program segments which, if loaded into a computer, preferably the plant controller (20) of a wind power plant (1), are designed to carry out the method according to one of Claims 1 to 6.

## Revendications

1. Procédé pour faire fonctionner une éolienne (1) comprenant un rotor (3) avec des pales de rotor (5) à angle réglable et un alternateur (9) à couple réglable, relié à lui en rotation,
**caractérisé en ce que**
le couple de l'alternateur (9) est limité à une valeur maximale qui est liée à l'angle de pale des pales du rotor (5) de telle sorte que la valeur maximale soit inférieure à la valeur nominale du couple (*M_{Nenn}*) lorsque la valeur de l'angle des pales est celle de la mise en fonctionnement et que la valeur maximale soit égale à la valeur nominale du couple (*M_{Nenn}*) lorsque l'angle nominal des pales est différent de l'angle de pales de mise en fonctionnement.

2. Procédé selon la revendication 1,
**caractérisé en ce que**
l'angle de pale est modifié par le couple lorsque la valeur maximale est atteinte.

3. Procédé selon la revendication 1,
**caractérisé en ce que**
la liaison entre la valeur maximale pour le couple et l'angle de pale s'effectue au moyen d'une courbe caractéristique (30), de préférence paramétrée.

4. Procédé selon la revendication 1,
**caractérisé en ce que**
la courbe caractéristique et/ou l'angle nominal de pale sont modifiés en fonction de l'état de fonctionnement de l'éolienne (*Modus*) et/ou des conditions ambiantes.

5. Procédé selon la revendication 1,
**caractérisé en ce que**
la modification de la courbe caractéristique (30) tient compte de la dynamique de charge (*BDyn*) de l'éolienne (1).

6. Procédé selon l'une des revendications précédentes,
**caractérisé en ce que**
l'angle de pale des pales du rotor (5) et le couple de l'alternateur (9) sont réglés en fonction d'une valeur de consigne de l'angle de pale (*α_{Soll}*) et d'une valeur de consigne du couple (*M_{Soll}*), la valeur maximale (*M_{Soll ;Max}*) limitant la valeur de consigne du couple (*M_{Soll}*) et étant liée à la valeur de consigne de l'angle de pale (*α_{Soll}*).

7. Éolienne (1) comprenant un rotor (3) avec plusieurs pales de rotor (5) dont l'angle de pale est apte à être réglé, qui est agencé de manière rotative sur une nacelle (2) elle-même agencée de manière rotative sur une tour (6) et qui est relié par un train d'entraînement (10) à un alternateur (9) agencé dans la nacelle (2) pour convertir l'énergie éolienne agissant sur le rotor (3) en énergie électrique, et un système de commande (20) de l'installation, pour commander l'éolienne (1) et ses composants,
**caractérisé en ce que**
le système de commande (20) de l'installation est conçu de façon à mettre en œuvre le procédé selon l'une des revendications précédentes.

8. Éolienne (1) selon la revendication 7,
**caractérisé en ce que**
le système de commande (20) de l'installation est conçu de façon à commander l'angle de pale des pales du rotor lorsque la valeur maximale du couple (*M*_{*Soll* ;*Max*}) est atteinte, en fonction de la vitesse de rotation du rotor (3).

9. Éolienne (1) selon la revendication 8,
**caractérisé en ce que**
le système de commande (20) de l'installation est conçu de façon à augmenter ou réduire temporairement le couple et/ou la valeur de consigne du couple (*M_{Soll}*) afin d'influencer la vitesse de rotation du rotor (3).

10. Produit logiciel comprenant des parties de programme qui, une fois chargées dans un ordinateur, sont conçues de préférence pour le système de commande (20) d'une éolienne (1), pour la mise en œuvre du procédé selon l'une des revendications 1 à 6.
